Europäisches Patentamt

European Patent Office

Office européen des brevets

(19)

(11) Veröffentlichungsnummer : **0 103 579**
**B1**

(12) **EUROPÄISCHE PATENTSCHRIFT**

(45) Veröffentlichungstag der Patentschrift :
**30.12.86**

(21) Anmeldenummer : **83900621.0**

(22) Anmeldetag : **10.02.83**

(86) Internationale Anmeldenummer :
**PCT/DE 83/00024**

(87) Internationale Veröffentlichungsnummer :
**WO/8302995 (01.09.83 Gazette 83/20)**

(51) Int. Cl.⁴ : **F 26 B 17/00**, F 26 B  3/08,
F 26 B  3/26, C 09 C  1/58

(54) VORRICHTUNG UND VERFAHREN ZUM TROCKNEN VON PULVERFÖRMIGEN UND AGGLOMERIERTEN ODER GEKÖRNTEN FESTSTOFFEN.

(30) Priorität : **20.02.82 DE 3206259**

(43) Veröffentlichungstag der Anmeldung :
**28.03.84 Patentblatt 84/13**

(45) Bekanntmachung des Hinweises auf die Patenterteilung : **30.12.86 Patentblatt 86/52**

(84) Benannte Vertragsstaaten :
**BE DE FR GB NL**

(56) Entgegenhaltungen :
CH-A-   400 899
DE-C-   270 855
FR-A- 1 098 535
FR-A- 1 184 276
FR-A- 1 469 883
FR-A- 2 084 207
FR-A- 2 371 227
GB-A-    29 824
GB-A-   566 170
GB-A-   729 186
US-A- 3 044 179
US-A- 3 328 131
VGB KraftwerkstechniK, 61, Heft 2, Febr. 81, S. 92 u. 93
Ullmanns Encyclopädie der techn. Chemie, Verlag Chemie, Weinheim/Bergstr. 4. Aufl. Band 3 S. 437

(73) Patentinhaber : **Union Rheinische Braunkohlen Kraftstoff Aktiengesellschaft**
**Ludwigshafener Strasse o. Nr. Postfach 8**
**D-5047 Wesseling (DE)**

(72) Erfinder : **HAMMER, Hartmut**
**Trakehner Strasse 20**
**D-5000 Köln 60 (DE)**
Erfinder : **KEIM, Karl-Heinz**
**Höhenring 31**
**D-5357 Heimerzheim (DE)**
Erfinder : **MEISENBURG, Ewald**
**Höhenring 60**
**D-5357 Heimerzheim (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

0 103 579

**Beschreibung**

Die Erfindung betrifft ein Verfahren zur Trocknung von Feststoffen im Gegenstrom, wobei sich die Feststoffe von oben nach unten durch Einbauten, die Kanäle enthalten, einem Inertgasstrom entgegenbewegen und in den Kanälen ein Wirbelbett eingestellt wird, wobei insbesondere pelletierter Trockenruß erhalten werden kann.

Die Erfindung betrifft ferner die Vorrichtung zur Durchführung des Verfahrens nach Anspruch 6.

Das Trocknen von Feststoffen im Wirbelbett oder Rieselbett ist bekannt.

So ist in DE-A-2 216 155 eine Trockenvorrichtung beschrieben, die aus einem zylindrischen Behälter besteht, in den von oben feuchte Rußpellets eingeführt werden. In dem Behälter wird bei erhöhter Temperatur durch Zugabe von insbesondere Dampf ein Wirbelbett aufrechterhalten, in dem die Trocknung der Pellets erfolgt.

Auch in der FR-A-1 469 883 wird ein Verfahren beschrieben, in dem feuchte Rußpellets in einem Wirbelbett getrocknet werden. Auch in diesem Verfahren befindet sich das Wirbelbett in einem zylindrischen Behälter ohne Einbauten.

Es sind auch Trocknungsvorrichtungen bekannt, die Einbauten enthalten. So ist in GB-A-1 037 694 eine Trocknungsapparatur offenbart, die an der Innenwand Leitbleche enthält, welche das von oben nach unten rieselnde Trocknungsgut seitlich ablenken.

In DE-C-270 855 wird ebenfalls eine Trocknungsvorrichtung offenbart, die Einbauten enthält, die als Heizflächen mit großer Oberfläche ausgebildet sind.

Diese und ähnliche Trocknungsvorrichtungen haben jedoch entscheidende Nachteile : einmal werden relativ hohe Mengen an Dampf bzw. anderen Gasen zum Trocknen benötigt, zum anderen müssen, um eine vollständige Trocknung zu erreichen, sowohl bei Innen- als auch bei Außenbeheizung relativ hohe Temperaturen aufgewendet werden, ferner werden bei Trocknung im Rieselbett, auch bei vorhandenen Einbauten, wegen des relativ schlechten Wärmeübergangs große Heizflächen benötigt und schließlich führt im Falle der Trocknung von Agglomeraten bzw. Pellets die einheitlich hohe Temperatur in der Trocknungsvorrichtung zu plötzlichem Verdampfen der Feuchtigkeitsbestandteile in den Pellets, verbunden mit Aufplatzen der Pellets und entsprechender unerwünschter Bildung von zerfallenem Material.

Aufgabe der vorliegenden Erfindung war es daher, ein Trocknungsverfahren und eine Trocknungsvorrichtung zu schaffen, insbesondere zur Trocknung feuchter Rußpellets oder -agglomerate, welche die oben aufgeführten, dem Stande der Technik entsprechenden Nachteile vermeiden, d. h. ein Trocknungsverfahren und eine Trocknungsapparatur zur Verfügung zu stellen, wobei das Platzen der Pellets verhindert und gleichzeitig die Menge an zur Trocknung erforderlichem Inertgas und/oder Wasserdampf bei möglichst niedriger Trocknungstemperatur und unter Reduzierung der erforderlichen Heizflächen reduziert wird.

Erfindungsgemäß wurde die Aufgabe bei einem Verfahren zum Trocknen von pulverförmigen und/oder agglomerierten Feststoffen in einer außen oder innen beheizten Trocknungsvorrichtung, die bevorzugt ein zylindrischer, vertikal stehender Behälter ist und in der sich die feuchten Feststoffe von oben nach unten in einem Wirbelbett Gasstrom entgegenbewegen, dadurch gelöst, daß zur Einstellung eines wesentlichen Temperaturgradienten von beispielsweise 150 °C im Wirbelbett mit von oben nach unten zunehmender Temperatur die zu trocknenden Feststoffe im Wirbelbett über Einbauten und durch Kanäle in Einbauten geführt werden, wobei der Gasstrom aus einem Inertgas und/oder Wasserdampf besteht.

Die Trocknungsapparatur besteht bevorzugt aus einem zylindrischen, vertikal stehenden Behälter, der von außen beheizt wird, jedoch auch eine Innenbeheizung und eine Kühlzone besitzen kann. Die räumliche Gestaltung des Trocknungsbehälters ist jedoch nicht auf ein zylindrisches Rohr beschränkt. Auch konisch verlaufende Ausgestaltungen des Trocknungsbehälters sind z. B. brauchbar oder Behälter, die aus zwei gleichen oder ungleichen nach unten oder oben sich erweiternden oder verengenden Teilen bestehen sowie weitere hier nicht näher beschriebene Ausführungsformen.

Die feuchten Agglomerate werden bevorzugt am oberen Ende des Trockners in denselben eingeführt, die Zuführung kann jedoch auch an einer tiefer gelegenen Stelle erfolgen.

Der Innenraum des Trockners ist mit Einbauten oder Packungen versehen, die Kanäle oder anders ausgebildete Passagen für das sich von oben nach unten bewegende Gut besitzen. Diese Passagen können vielfältig ausgestaltet sein. Erfindungsgemäß sind besonders geeignete Einbauten « statische Mischer », wie sie beispielsweise in Chemie-Ing.-Techn. 43. Jahrg. 1971, No. 6, S. 348 beschrieben sind, die Kanäle mit einem bestimmten Neigungswinkel besitzen. Der Neigungswinkel sollte nicht kleiner als 20° sein und bevorzugt bei 40-60° liegen. Aber auch größere Neigungswinkel, gemessen gegen die Horizontale je nach Rieselfähigkeit des Produktes, sind geeignet.

Die Einbauten können auch als Heiz- oder Kühlsysteme ausgebildet sein, müssen jedoch erfindungsgemäß die Ausbildung eines Wirbelbetts ermöglichen, in dem sich ein Temperaturgradient ausbildet, der das Zerplatzen der aufgegebenen Agglomerate verhindert.

Die trockenen Pellets verlassen den Trockenturm am unteren Bereich und werden auf bekannte Weise aus dem Trockner herausbefördert. Oberhalb der Entnahmestelle für die getrockneten Pellets

2

befinden sich Einlaßstutzen für Inertgas. Das Inertgas strömt dem sich von oben nach unten bewegenden Trocknungsgut entgegen unter Ausbildung eines Wirbelbetts und wird im oberen Bereich des Trockners auf übliche Weise abgezogen.

Als Inertgase sind $CO_2$ und/oder $N_2$ bevorzugt, wobei pro t Trockengut 1-400 m³/h, vorzugsweise 20-80 m³ Inertgas zugeführt werden.

Oberhalb der Inertgaseinlaßstutzen befinden sich Eingänge für Wasserdampf. Der Abstand zu den Inertgasstutzen wird so gewählt, daß die aus dem unteren Teil des Trockners abgezogenen Pellets keine Feuchtigkeit enthalten. Die Zumischung des Wasserdampfes erlaubt es, einen Teil des Inertgases durch Wasserdampf zu ersetzen. Pro m³ Inertgas können 1-10 m³ Wasserdampf zugesetzt werden. Bevorzugt ist ein Verhältnis von Inertgas zu Wasserdampf von 1 : 2-5 Vol.-Teilen.

Die Beheizung des Trockners erfolgt in der Regel von außen. Bei geeigneten Einbauten kann jedoch auch Innenbeheizung erfolgen, etwa in der Weise, daß die Einbauten innen mit Dampf beheizt werden können. Gleichermaßen können solche Einbauten auch als Kühlsysteme ausgebildet sein.

Obgleich die Einstellung eines Wirbelbetts in der Trocknungsapparatur erfindungswesentlich ist, ist es nicht erforderlich, in der gesamten Apparatur ein Wirbelbett einzustellen.

Bevorzugt enthält die Trocknungsvorrichtung im unteren Bereich ein Wirbelbett und darüber eine Beruhigungszone, durch die das Trocknungsgut hindurchrieselt, so daß die Apparatur bereichsweise ein Wirbelbett und bereichsweise ein Rieselbett enthält.

Die Trocknungsvorrichtung kann außer der beheizten Trocknungszone auch eine Kühlzone enthalten, z. B. unterhalb der Trocknungszone, die als — von außen gekühltes — Wirbelbett mit oder ohne Einbauten ausgebildet sein kann.

Die Einbauten können unterschiedlich ausgestaltet sein. Wesentlich ist, daß ein Wirbelbett einstellbar ist, in dem durch die Einbauten ein besonders intensiver Austausch zwischen Feststoff und entgegenströmendem Gas erzielt wird, verbunden mit einem Austausch der Feuchtigkeit zwischen Feststoff und entgegenströmendem Gas.

Es hat sich für den Fachmann überraschend gezeigt, daß statische Mischer besonders geeignete Einbauten sind. Statische Mischer enthalten feststehende Leitelemente mit Strömungskanälen. Sie werden gemäß dem Stand der Technik zum Mischen von Flüssigkeiten und Gasen, zum Kontaktieren von Gasen mit Flüssigkeiten sowie zum Dispergieren ineinander unlöslicher Flüssigkeiten verwendet.

Für den Fachmann unerwartet und nicht vorhersehbar kann gemäß vorliegender Erfindung in den Strömungskanälen der statischen Mischer ein Wirbelbett eingestellt werden, wobei sich im Bereich des Wirbelbetts ein variierbarer Temperaturgradient einstellen läßt.

Es hat sich hierbei für den Fachmann überraschend gezeigt, daß die zur Trocknung und zur Aufrechterhaltung des Wirbelbetts erforderliche Gasmenge bei ca. der Hälfte der ohne die Einbauten erforderlichen Menge liegt.

Dies führt zu erheblichen Vorteilen bei der Aufarbeitung des aus dem Trocknungsturm austretenden feuchten Gases, sowie zu geringerem Abrieb und Zerfall der Pellets.

Führt man dagegen das zu trocknende Gut, wie z. B. feuchte Pellets dem Inertgas und/oder Wasserdampf im Trockenturm, der keine Einbauten enthält, entgegen, so stellt sich bereits nach kurzer Zeit im Turm eine einheitliche Temperatur ein, auch bei Einstellen eines Wirbelbetts.

Der durch die eingestellte Temperaturdifferenz zwischen eintretenden Pellets und eintretendem Inertgas und/oder Wasserdampf variierbare Temperaturgradient innerhalb des Trockners erlaubt nun erfindungsgemäß eine allmähliche Verdampfung der in den Pellets enthaltenen Feuchtigkeit, ohne daß eine spontane Verdampfung innerhalb der Pellets und damit ein Zerfall derselben eintritt.

Anstelle von statischen Mischern können jedoch auch andere Einbauten, die Kanäle enthalten, erfindungsgemäß verwendet werden, in deren Kanälen ein Wirbelbett einstellbar ist. Es sind jedoch solche Kanäle und Passagen erforderlich mit einem Rieselwinkel von nicht kleiner als 20° und bevorzugt 40-60° gemessen gegen die Horizontale.

Erfindungsgemäß kann die Trocknung in der Weise durchgeführt werden, daß zwischen Eintrittstemperatur der feuchten Pellets, die ein Agglomeriermittel enthalten können, und Eintrittstemperatur von Inertgas und/oder Wasserdampf eine Temperaturdifferenz von z. B. 150 °C besteht, mit der tieferen Temperatur an der Eintrittsstelle der feuchten Pellets.

Die Erfindung macht eine kleinere Ausführung der Apparatur möglich, verglichen mit Trochnungsapparaturen des Standes der Technik, wegen der kleineren Wärmeübertragungsfläche, da nur in einer begrenzten Zone die höchste nötige Trocknungstemperatur vorliegen muß und durch die wesentlich bessere Wärmeleitfähigkeit des Wirbelbetts mit Einbauten gegenüber einem Wirbelbett ohne Einbauten bzw. gegenüber einem Rieselbett eine sur Trocknung ausreichende Wärmemenge übertragen werden kann. Durch die durch das Wirbelbett vorgegebene Auflockerung und Vermischung werden die Pellets gleichmäßig getrocknet. Die Pellets schrumpfen beim Trocknen und erhalten dabei eine gute Härte. Es wird so z. B. bei Einsatz von feuchten Rußpellets ein abriebfester und staubarmer Ruß erhalten. Da nur relativ geringe Inertgasmengen benötigt werden, sind Verluste an Kohlenwasserstoffen klein, falls die Feuchtigkeit im eingesetzten Ruß teilweise oder ganz aus Kohlenwasserstoffen besteht.

Demgemäß lassen sich getrocknete Feststoffe, insbesondere trockene Agglomerate, erzeugen, unter Vermeidung sämtlicher oben geschilderter, dem Stande der Technik entsprechenden Nachteile.

Die Erfindung soll am Beispiel der Trocknung von Rußpellets mit Hilfe eines Fließbildes näher

3

erläutert werden. Rußwasser, wie es zum Beispiel bei der Vergasung von Rückstandsölen anfällt, gelangt über (1) in einen Mischer (2), in den über (3) rückgeführte leichte Kohlenwasserstoffe aus dem Kondensatvorrat (18) zugemischt werden. Zusätzlich können über Zuleitung (4) Verluste an leichten Kohlenwasserstoffen ergänzt werden.

Über Entspannungsorgan (5) wird das Gemisch von Ruß, Wasser und Kohlenwasserstoffen in einen unter geringerem Druck als in (2) stehenden Behälter (6) entspannt. In Behälter (6) tritt eine Trennung in rußfreies Wasser auf und in eine Kohlenwasserstoffdampfphase, mit der zusammen der nunmehr vom Wasser abgetrennte Ruß über Leitung (7) in einen Zyclon (8) entweicht.

Der in Zyclon (8) anfallende pulverförmige, nur noch geringe Mengen Wasser und Kohlenwasserstoffe enthaltende Ruß gelangt in Mischbehälter (9), in dem, bezogen auf 1 kg Trockenruß 0.1-10 Liter Kohlenwasserstoffe, bevorzugt 5-6 Liter leicht siedende Kohlenwasserstoffe im Siedebereich von 0 °C bis 100 °C über Leitung (20) aus Behälter (19), 0,1-50 Gew.%, vorzugsweise 2-30 Gew.% und besonders bevorzugt 20 Gew.% Wasser bezogen auf Trockenruß über Leitung (21) pro kg Trockenruß, zudosiert werden. Die Mischzeit beträgt 1 sec.-30 min., vorzugsweise 1-10 min. und besonders bevorzugt 6 min.

Die hierbei gebildeten Pellets, die einen Durchmesser von 0,01-10 mm und vorzugsweise von 0,1-1 mm besitzen, gelangen nun über Vortrockner (10) und Leitung (11) in den Trockenapparat (12).

An der Eintrittsstelle liegt die Temperatur bei ca. 100 °C. Der Trockner (12) ist mit statischen Mischern gefüllt, deren Kanäle einen Neigungswinkel von ca. 45° bilden.

An der Eintrittsstelle (13) wird Stickstoff von ca. 250 °C zugefügt in einer Menge von ca. 50 m³/t Ruß.

Hierbei stellt sich im Trockner ein Wirbelbett ein. Stellte man zum Vergleich das gewünschte Wirbelbett in Abwesenheit der Einbauten ein, so wäre mindestens die doppelte Menge Stickstoff erforderlich, dessen Temperatur über 250 °C liegen müßte, um vollständige Trocknung zu erzielen.

Der Trockner (12) ist außen beheizt. Im Trockner stellt sich im Wirbelbett eine von unten nach oben abnehmende Temperatur ein von 100 auf 250 °C.

Die Kühlung kann in einem Wirbelbett unterhalb der Trocknungszone durchgeführt werden. In diesem Falle kann der für die Einstellung des Wirbelbetts erforderliche Stickstoff unterhalb der Kühlzone mit Normaltemperatur eingeführt werden.

Oberhalb von (13) befinden sich Eintrittsstellen (14) für Wasserdampf, die in einem solchen Abstand zu den Eintrittsstellen des Inertgases angeordnet sind, daß wasserfreies Gut am unteren Ende des Trockners austritt.

Am unteren Ende des Trockners (12) werden trockene, staubfreie Pellets mit folgender Siebanalyse abgezogen :

Siebanalyse (Beispiel)

| > 1 | mm | 0,4 % |
|---|---|---|
| > 0,5 | mm | 48,2 % |
| > 0,25 | mm | 38,6 % |
| > 0,125 | mm | 11,2 % |
| < 0,125 | mm | 1,6 % |

Die über Kopf des Trockners (12) abziehenden Dämpfe, die noch Spuren Ruß enthalten, werden mit den aus Zyclon (8) abziehenden Dämpfen vereint und in Kühler (15) kondensiert. Das in (15) anfallende Kondensat wird in Mischer (2) rückgeführt. Das Inertgas entweicht über Leitung (16).

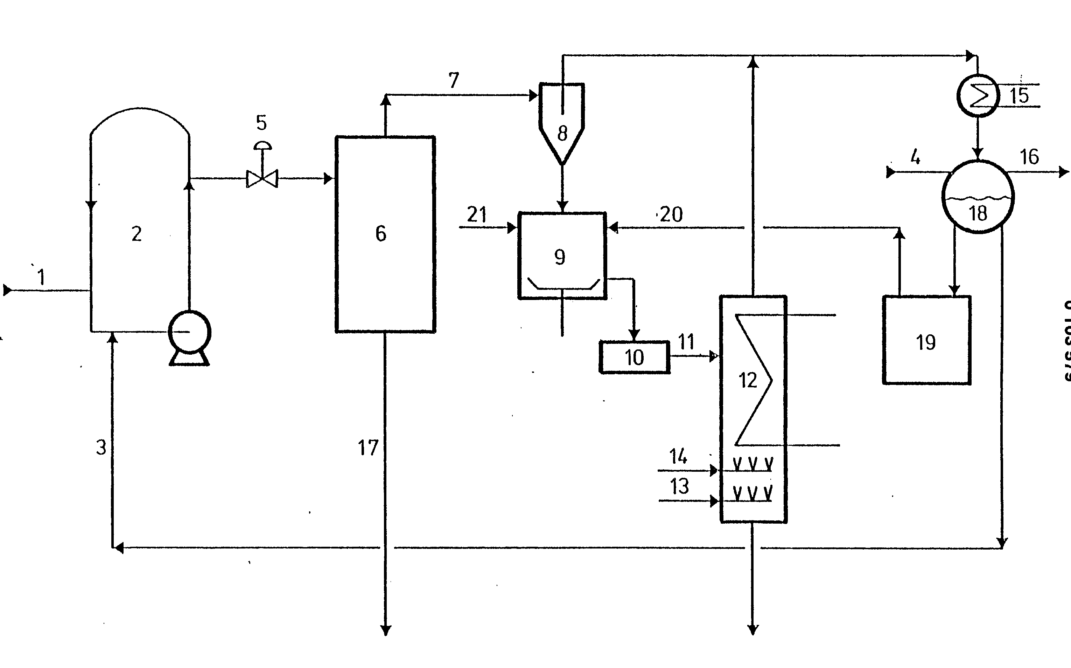

**Patentansprüche**

1. Verfahren zum Trocknen von pulverförmigen und/oder agglomerierten Feststoffen in einer außen oder inner beheizten Trocknungsvorrichtung, die bevorzugt ein zylindrischer, vertikal stehender Behälter ist und in der sich die feuchten Feststoffe von oben nach unten in einem Wirbelbett einem Gasstrom entgegenbewegen, dadurch gekennzeichnet, daß zur Einstellung eines wesentlichen Temperaturgradienten von beispielsweise 150 °C im Wirbelbett mit von oben nach unten zunehmender Temperatur die zu trocknenden Feststoffe im Wirbelbett über Einbauten und durch Kanäle in den Einbauten geführt werden, wobei der Gasstrom aus einem Inertgas und/oder Wasserdampf besteht.

2. Verfahren nach Anspruch 1 dadurch gekennzeichnet, daß eine Temperatur an der Feststoffeintrittsstelle von 0-500 °C, vorzugsweise von 50-200 °C eingestellt wird.

3. Verfahren nach Anspruch 1 oder 2, dadurch gekennzeichnet, daß die Inertgasmenge 1-400 m³/h, vorzugsweise 20-80 m³/h pro t Feststoff ist.

4. Verfahren nach einem der Ansprüche 1-3, dadurch gekennzeichnet, daß 1-10 m³ Wasserdampf pro m³ Inertgas, vorzugsweise 2-5 m³ Wasserdampf pro m³ Inertgas zugeführt werden.

5. Verfahren nach einem der Ansprüche 1-4, dadurch gekennzeichnet, daß sich die feuchten Feststoffe durch statische Mischer als Einbauten von oben nach unten bewegen.

6. Vorrichtung zum Trocknen von pulverförmigen und/oder agglomerierten Feststoffen im Gegenstrom, die von außen oder innen beheizbar ist und bevorzugt ein zylindrischer, vertikaler Behälter ist, wobei sich die Feststoffzuführung im oberen Teil und eine Gaszuführung zur Einstellung eines Wirbelbetts im unteren Teil der Vorrichtung befinden, dadurch gekennzeichnet, daß die Vorrichtung im Bereich des Wirbelbetts Einbauten enthält mit Kanälen und Passagen, wobei der gegen die Horizontale gemessene Rieselwinkel in den Kanälen und Passagen nicht kleiner als 20° und vorzugsweise 40-60° ist.

7. Vorrichtung nach Anspruch 6 dadurch gekennzeichnet, daß eine Wasserdampfzuführung oberhalb der Gaszuführung liegt.

8. Vorrichtung nach Anspruch 6 oder 7, dadurch gekennzeichnet, daß die Einbauten statische Mischer sind.

### Claims

1. A process for drying powder-form and/or agglomerated solids in an externally or internally heated dryer, which is preferably a cylindrical, vertically arranged vessel and in which the moist solids move downwards in a fluidized bed counterflowing to a stream of gas, characterized in that for establishing an essential temperature gradient of for example 150 °C in the fluidized bed in which the temperature decreases downwards, the moist solids, which are to be dried, are guided over fitting and through ducts in the fittings, whereby the stream of gas consists of an inert gas and/or steam.

2. A process as claimed in Claim 1, characterized in that a temperature of from 0 to 500 °C and preferably from 50 to 200 °C is adjusted at the point of entry the solids.

3. A process as claimed in Claims 1 and 2, characterized in that the inert gas is used in a quantity of from 1 to 400 $m^3/h$ and preferably in a quantity of from 20 to 80 $m^3/h$ per t of solids.

4. A process as claimed in Claims 1 to 3, characterized in that the steam is used in a quantity of from 1 to 10 $m^3$ and preferably in a quantity of from 2 to 5 $m^3$ per $m^3$ of inert gas.

5. A process as claimed in Claims 1 to 4, characterized in that the moist solids move downwards through static mixers as installations.

6. An apparatus for carrying out the process claimed in Claims 1 to 5 for drying powder-form and/or agglomerated solids in a counterflowing stream of gas in an externally or internally heated dryer which is preferably y cylindrical, vertically arraged vessel, whereby the point of entry of the moist solids is in the upper part of the vessel and a the point of entry of the gas which is used for establishing a fluidized bed is in the lower part of the vessel, characterized in that the apparatus contains fittings with ducts or other types of passage in the fluidized bed zone, whereby the angle of flow is no less than 20° and preferably 40-60°, as measured against the horizontal.

7. An apparatus as claimed in Claims 1 to 6, characterized in that the steam inlet is situated above the inert gas inlet.

8. An apparatus as claimed in Claims 1 to 7, characterized in that the fittings are static mixers.

### Revendications

1. Procédé pour sécher des matières solides pulvérulentes et/ou agglomérées dans un dispositif de séchage, chauffé extérieurement ou intérieurement, qui est de préférence un récipient cylindrique vertical et dans lequel les matières solides humides se déplacent de haut en bas, dans un lit fluidisé, à contre-courant avec un courant gazeux, caractérisé en ce que, pour créer un important gradient thermique dans le lit fluidisé, de 150 °C par exemple, avec augmentation de la température de haut en bas, on guide les matières solides à sécher dans le lit fluidisé par des éléments incorporés et à travers des canaux dans les éléments incorporés, le courant gazeux étant formé de gaz inerte et/ou de vapeur d'eau.

2. Procédé selon la revendication 1, caractérisé en ce que l'on ajuste une température de 0-500 °C, de préférence de 50-200 °C au point d'entrée des matières solides.

3. Procédé selon la revendication 1 ou 2, caractérisé en ce que le débit de gaz inerte est de 1-400 $m^3/h$, de préférence de 20-80 $m^3/h$ par tonne de matière solide.

4. Procédé selon l'une des revendications 1 à 3, caractérisé en ce que l'on introduit 1-10 $m^3$ de vapeur d'eau par $m^3$ de gaz inerte, de préférence 2-5 $m^3$ de vapeur d'eau par $m^3$ de gaz inerte.

5. Procédé selon l'une quelconque des revendications 1 à 4, caractérisé en ce que les matières solides humides se déplacent du haut vers le bas à travers des éléments incorporés formés par des mélangeurs statiques.

6. Dispositif pour sécher, à contre-courant, des matières solides pulvérulentes et/ou agglomérées, dispositif qui peut être chauffé de l'extérieur ou de l'intérieur et est de préférence un récipient cylindrique vertical, l'arrivée des matières solides se trouvant dans la partie supérieure et une arrivée de gaz pour la création d'un lit fluidisé se trouvant dans la partie inférieure du dispositif, caractérisé en ce qu'il contient des éléments incorporés avec des canaux et des passages dans la région du lit fluidisé, l'angle d'écoulement libre dans les canaux et passages n'étant pas inférieur à 20° et étant de préférence de 40-60° par rapport à l'horizontale.

7. Dispositif selon la revendication 6, caractérisé en ce qu'une arrivée de vapeur d'eau est située au-dessus de l'arrivée de gaz.

8. Dispositif selon la revendication 6 ou 7, caractérisé en ce que les éléments incorporés sont des mélangeurs statiques.